# EUROPÄISCHE PATENTSCHRIFT

(11) **EP 2 465 754 B1**
(45) Veröffentlichungstag und Bekanntmachung des Hinweises auf die Patenterteilung: **07.01.2015**
(21) Anmeldenummer: 11009387.9
(22) Anmeldetag: 26.11.2011
(51) Int. Cl.: B62D 15/02, B60W 30/12, B60T 8/1755, G01C 21/36, G01C 21/26, B62D 6/04, B60T 7/18, B60W 10/20, B60W 50/00, B60W 30/10

(54) **Verfahren zum Betrieb eines querführenden Fahrerassistenzsystems eines Kraftfahrzeugs und Kraftfahrzeug**
Method for operating a sideways driver assistance system of a motor vehicle and motor vehicle
Procédé de fonctionnement d'un système d'assistance au conducteur permettant le guidage latéral d'un véhicule automobile et véhicule automobile

(30) Priorität: 18.12.2010 DE 102010055136
(43) Veröffentlichungstag der Anmeldung: 20.06.2012
(73) Patentinhaber: Audi AG, 85045 Ingolstadt (DE)
(72) Erfinder: Meitinger, Karl-Heinz, 81667 München (DE); Bär, Michael, 85049 Ingolstadt (DE)
(74) Vertreter: Thielmann, Frank

(56) Entgegenhaltungen:
- EP-A2- 1 013 523
- EP-A2- 2 159 777
- JP-A- 2005 145 336
- JP-A- 2005 247 158
- JP-A- 2007 168 592
- JP-A- 2007 210 412

## Beschreibung

Die Erfindung betrifft ein Verfahren zum Betrieb eines querführenden Fahrerassistenzsystems eines Kraftfahrzeugs, bei dem ein zukünftiger Straßenverlauf aus Umfeld- und/oder Betriebsdaten des Kraftfahrzeugs ermittelt und daraus wenigstens ein einen Lenkeingriff bestimmender Querführungsparameter abgeleitet wird. Daneben betrifft die Erfindung ein Kraftfahrzeug mit einem solchen Fahrerassistenzsystem.

Derartige Fahrerassistenzsysteme zur Querführung eines Kraftfahrzeugs, die selbsttätige Lenkeingriffe vornehmen können, sind bereits bekannt. Als Beispiel seien Spurhalteassistenten genannt, bei denen das Kraftfahrzeug, beispielsweise auf einer Autobahn, selbsttätig dem Verlauf der Fahrspur folgt, solange hierfür nicht zu starke Lenkeingriffe erforderlich sind. Üblicherweise werten derartige querführende Fahrerassistenzsysteme einen zukünftigen Straßenverlauf aus, der aus Umfeld- und/oder Betriebsdaten des Kraftfahrzeugs ermittelt wird. Diesem Straßenverlauf können Zusatzinformationen zugeordnet sein, beispielsweise eine Straßenkategorie oder dergleichen.

Dabei sind Ausgestaltungen bekannt, in denen der zukünftige Straßenverlauf durch ein Navigationssystem des Kraftfahrzeugs ermittelt und einem Steuergerät des Fahrerassistenzsystems zur Verfügung gestellt wird, welches dann hieraus die Querführungsparameter, insbesondere einen einzustellenden Lenkwinkel, ableitet. Ein solcher, durch ein Navigationssystem zur Verfügung gestellter zukünftiger Straßenverlauf kann beispielsweise in Form von Formelementen zur Verfügung gestellt werden, die häufig auch als Klothoiden bezeichnet werden. Diesen sind Attribute zugeordnet, die den künftigen Straßenverlauf, konkret den Verlauf der befahrenen Fahrbahn, bereitstellen. Die Attribute umfassen beispielsweise die horizontale Krümmung in Fahrtrichtung, die Straßenkategorie, den Straßenbelag und dergleichen. Neben den querführenden Fahrerassistenzsystemen können diese Daten auch als Umfelddaten in anderen Fahrzeugsystemen genutzt werden.

Es ist üblich, Straßen quer zur Fahrtrichtung nicht senkrecht zum Schwerevektor, also nicht absolut waagerecht, zu bauen, um beispielsweise das Abfließen von Regenwasser zu ermöglichen. Diese Abweichung des Querverlaufs der Fahrbahnoberfläche von der Horizontalen wird üblicherweise als "Straßenüberhöhung" bezeichnet. Straßen werden dabei häufig so gestaltet, dass in Kurven die Neigung zur Kurveninnenseite hin ausgerichtet ist, während bei geradem Straßenverlauf die Straßen beziehungsweise Fahrbahnen nach rechts hin abfallen, so dass Flüssigkeit ablaufen kann. Entsprechend kann es vorkommen, dass vor einer Kurve ein Straßenüberhöhungswechsel stattfindet, wenn beispielsweise bei einer nach rechts abfallenden Straßenoberfläche bald eine Linkskurve folgt, die zur Kurveninnenseite hin geneigt sein soll.

Derartige Überhöhungswechsel finden meist, um den Bereich, in dem die Straße gänzlich oder annähernd horizontal ist, möglichst gering zu halten, in relativ kurzen Änderungsbereichen statt, beispielsweise auf einer Strecke von 50 m. Nachdem dieser Überhöhungswechsel einem querführenden Fahrerassistenzsystem nicht bekannt ist, kommt es bei einem Überhöhungswechsel, beispielsweise vor einer Kurve, teilweise zu einer starken lateralen Pfadabweichung. Zwar fällt diese Fahrtabweichung in den Umfeld- und/oder Betriebsdaten des Kraftfahrzeugs, welche auch zur Ermittlung des Lenkeingriffs verwendet werden, auf, aufgrund der Trägheit der Regelung, die hauptsächlich aufgrund von Komfortkriterien notwendig ist, sammeln sich jedoch starke Abweichungen an, die mit den durch die Systemgrenzen beschriebenen maximalen Lenkmomenten nicht mehr ausgeglichen werden können. Ergebnis ist, dass das Fahrerassistenzsystem deaktiviert wird (Abwurf der Funktion) und ein manueller Eingriff nötig wird. Die Beschränkungen der erlaubten Lenkmomente ergeben sich beispielsweise aus gesetzlichen Regelungen, so dass als Grenze beispielsweise 3 Nm Lenkmoment vorgesehen sein können, die meist beim Überhöhungswechsel nicht ausreichend sind. JP 2005-247158 A betrifft eine Fahrzeug-Fahrtsteuerungseinrichtung, die die Lenkung im Hinblick auf eine Straßenüberhöhung steuern kann und wenig gespeicherte Daten benötigt. Dort wird vorgeschlagen, die aktuelle Straßenüberhöhung einer befahrenen Straße abhängig von der Krümmung der Straße und der Geschwindigkeit, für die die Straße ausgelegt ist, zu bestimmen. Die dortige Idee ist es, dass beim Bau der Straße die Straßenüberhöhung so gewählt wird, dass eine Kurve leicht zu durchfahren ist, und mithin abhängig von der für die Straße vorgesehenen Geschwindigkeit und der Straßenkrümmung gewählt wird. Mithin sind ein Querbeschleunigungssensor und ein Gierratensensor nicht mehr notwendig. Das Lenkmoment wird für eine aktuelle Situation und Position des Kraftfahrzeugs ausgewertet, nachdem ein aktueller Radlenkwinkel, eine Gierrate und dergleichen eingehen, die mit geeigneten Sensoren vermessen werden.

Der Erfindung liegt daher die Aufgabe zugrunde, ein Steuerungsverfahren für ein querführendes Fahrerassistenzsystem anzugeben, das auch bei Überhöhungswechseln ein ordnungsgemäßes Funktionieren der Assistenzfunktion erlaubt.

Zur Lösung dieser Aufgabe ist bei einem Verfahren der eingangs genannten Art erfindungsgemäß vorgesehen, dass bei der Ermittlung des Straßenverlaufs und/oder der Querführungsparameter eine die Änderung der Abweichung des Querverlaufs der Fahrbahnoberfläche von der Horizontalen beschreibende Straßenüberhöhungsinformation berücksichtigt wird, wobei eine aus der Änderung der Straßenüberhöhung resultierende laterale Spurabweichung für den zukünftigen Straßenverlauf unter Berücksichtigung der Straßenüberhöhungsinformation ermittelt und durch eine Anpassung des Querführungsparameters korrigiert wird.

Es wird also vorgeschlagen, eine Information über die Straßenüberhöhung bereitzustellen, so dass eine Lenkmomentenvorsteuerung bei der autonomen oder teilautonomen Fahrzeugführung möglich wird. Durch die dem zukünftigen Straßenverlauf zugeordnete Straßenüberhöhungsinformation ist vorab bekannt, mit welchen Effekten zu rechnen ist, so dass diese durch eine Vorsteuerung ausgeglichen werden können und keine zu starke, die Systemgrenzen beim Lenken überschreitende Abweichung ausgeglichen werden muss. Auf diese Weise wächst die Verfügbarkeit der durch das Fahrerassistenzsystem, beispielsweise einen Spurhalteassistenten zur Verfügung gestellten Funktion, ohne dass Einbußen beim Komfort der Regelung erlitten werden müssen. Auch in Fällen, in denen eine auftretende laterale Abweichung gegebenenfalls durch einen stärkeren Eingriff noch im Rahmen der Systemgrenzen hätte korrigiert werden können, erhöht sich die Akzeptanz des querführenden Fahrerassistenzsystems durch das erfindungsgemäße Verfahren, nachdem keine derart starken Lenkeingriffe mehr erforderlich sind, sondern die Korrektur sozusagen "verteilt" werden kann. Dies alles ist durch die dem zukünftigen Straßenverlauf zugeordnete Straßenüberhöhungsinformation möglich.

Es ist grundsätzlich möglich, die Straßenerhöhungsinformation aus den Sensordaten wenigstens eines Sensors, insbesondere einer Stereokamera und/oder eines Entfernungssensors, zu ermitteln. Hierzu wird ein Sensor benötigt, der Abstände erfassen kann, so dass aus der Veränderung von Abständen auf einen Straßenüberhöhungswechsel beziehungsweise eine sonstige Änderung der Straßenüberhöhung gefolgert werden kann. Geeignet als Entfernungssensoren sind beispielsweise Lasersensoren.

Nachdem eine derartige Messung aber meist mit einem Messfehler belastet sein dürfte und gegebenenfalls zusätzliche Sensoren benötigt werden, wird es erfindungsgemäß bevorzugt, dass die Straßenüberhöhungsinformation aus den Daten eines Navigationssystems ermittelt wird. Dabei kann konkret vorgesehen sein, dass ein Navigationssystem verwendet wird, bei dem jedem Streckenabschnitt eine Änderung und/oder ein Verlauf der Straßenüberhöhung zugeordnet ist. Es wird also vorgeschlagen, dass das Navigationssystem des Kraftfahrzeugs die Straßenüberhöhung bereitstellt, indem die zugrundeliegende Kartendatenbank des Navigationssystems um die Parameter der Straßenüberhöhung und deren Änderung erweitert wird. Dies ist bei den meisten Datenbankstrukturen der Navigationssysteme einfach möglich, nachdem zu den entsprechenden Streckenabschnitten lediglich ein zusätzliches Attribut hinzugefügt werden muss, welches den Verlauf der Straßenüberhöhung und/oder die Änderung der Straßenüberhöhung über diesen Streckenabschnitt beschreibt.

Es ist vorgesehen , dass eine aus einer Änderung der Straßenüberhöhung resultierende laterale Spurabweichung für den zukünftigen Straßenverlauf unter Berücksichtigung der Straßenüberhöhungsinformation ermittelt und durch eine Anpassung des Querführungsparameters korrigiert wird. Nachdem zu dem zukünftigen Straßenverlauf nun auch der Verlauf der Straßenüberhöhung oder wenigstens die integrale Änderung über einen Streckenabschnitt bekannt ist, kann mithin im voraus die resultierende laterale Spurabweichung für den zukünftigen Straßenverlauf, gegebenenfalls auch abschnittsweise, berechnet werden. Hieraus kann nun der Querführungsparameter beziehungsweise der Querführungsparameterverlauf so ermittelt werden, dass diese laterale Spurabweichung innerhalb der Systemgrenzen des Fahrerassistenzsystems korrigiert wird.

Dabei sind im Wesentlichen zwei Vorgehensweisen denkbar. Zum einen kann vorgesehen sein, dass für einen Änderungsbereich eines Streckenabschnitts, in dem sich die Straßenüberhöhung ändert, bei einem bekannten Verlauf der Straßenüberhöhung die laterale Spurabweichung zeitaktuell anhand der Straßenüberhöhungsinformation korrigiert wird. Das bedeutet, es wird letztlich so korrigiert, dass die laterale Spurabweichung beim tatsächlichen Befahren des zukünftigen Streckenabschnitts gar nicht erst auftritt. Es handelt sich um eine Art Regelung, die immer zeitaktuell kleine Anpassungen des Querführungsparameters, beispielsweise eines Solllenkwinkels, fordert.

Zum anderen ist es aber auch denkbar, dass für einen Änderungsbereich eines Streckenabschnitts eine integrale laterale Spurabweichung aus der Straßenüberhöhungsinformation ermittelt wird und über diesen Änderungsbereich korrigiert wird. In dieser Ausgestaltung geht es also hauptsächlich darum, die laterale Spurabweichung, die auftreten würde, wenn die Straßenüberhöhungsinformation nicht beachtet würde, über einen gewissen Zeitraum hinweg zu korrigieren, wobei es beispielsweise denkbar ist, bereits vor der tatsächlichen Änderung der Straßenüberhöhung eine entgegengesetzte laterale Spurabweichung zu erzeugen, die dann wieder ausgeglichen wird und dergleichen. Es ist selbstverständlich auch möglich, eine gewisse laterale Spurabweichung entstehen zu lassen, die dann im weiteren Verlauf wieder korrigiert wird. Dies alles kann, nachdem die Straßenüberhöhungsinformation ja dem zukünftigen Straßenverlauf zugeordnet im voraus bekannt ist, bereits von vornherein berücksichtigt und in die Ausgestaltung der Lenkeingriffe einbezogen werden.

Es ist denkbar, dass auch eine die Abweichung des Querverlaufs der Fahrbahnoberfläche von der Horizontalen beschreibende Straßenüberhöhungsinformation bei der Ermittlung des Straßenverlaufs und/oder der Querführungsparameter berücksichtigt wird.

Wie bereits beschrieben kann vorgesehen sein, dass als Querführungsparameter ein aktueller Solllenkwinkel verwendet wird. Es sind jedoch auch andere, gegebenenfalls zusätzliche, Querführungsparameter denkbar, die letztlich einen Lenkeingriff beschreiben, den das Fahrerassistenzsystem anhand der Querführungsparameter durchführt. Hierzu werden entsprechend Fahrzeugsysteme, insbesondere die Lenkung selbst, angesprochen. Ein anderer denkbarer Querführungsparameter ist beispielsweise ein Solllenkmoment.

Es kann ferner vorgesehen sein, dass der zukünftige Streckenverlauf in einem oder dem Navigationssystem ermittelt und dem Fahrerassistenzsystem zur Verfügung gestellt wird, insbesondere über einen Fahrzeugbus. Das Fahrerassistenzsystem beziehungsweise ein Steuergerät des Fahrerassistenzsystems kann also über einen Fahrzeugbus, beispielsweise ein CAN-Bus, mit dem Navigationssystem beziehungsweise dessen Steuergerät verbunden sein, um prädiktive Streckendaten, also den zukünftigen Straßenverlauf, von diesem zu erhalten. Das Navigationssystem kann dabei Sensordaten, beispielsweise Daten eines GPS-Sensors, eines Odometrie-Sensors und/oder einer Inertial-Sensorik, berücksichtigen, um zum einen die aktuelle Position des Kraftfahrzeugs zu bestimmen und zum anderen diese mit den aus der Kartendatenbank abgerufenen Kartendaten in Verbindung bringen (Map-Matching). Aus einer Zusammenfassung aller dieser Daten wird dann der zukünftige Straßenverlauf, der häufig auch als prädiktive Streckendaten bezeichnet wird, erzeugt und über eine Schnittstelle dem Fahrerassistenzsystem zur Verfügung gestellt, welches hieraus die Querführungsparameter immer dann, wenn es einen aktuellen zukünftigen Straßenverlauf erhält, vorausberechnet. Die Schnittstelle zwischen dem Steuergerät des Fahrerassistenzsystems und dem Navigationssystem kann dabei, wie beschrieben, ein CAN-Bus sein.

Neben dem Verfahren betrifft die vorliegende Erfindung auch ein Kraftfahrzeug, umfassend ein querführendes Fahrerassistenzsystem, welches zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, so dass sich auch hierdurch die bereits beschriebenen Vorteile erhalten lassen. Insbesondere kann das Kraftfahrzeug zusätzlich auch ein Navigationssystem umfassen, welches den zukünftigen Streckenverlauf zur Verfügung stellt und in dessen Kartenbank zusätzlich zu den bisher bekannten Kartendaten die Straßenüberhöhungsinformation abgelegt sein kann. Zur Kommunikation zwischen dem Navigationssystem und einem Steuergerät des querführenden Fahrerassistenzsystems kann das Kraftfahrzeug ferner einen Fahrzeugbus, insbesondere einen CAN-Bus, umfassen. Das erfindungsgemäße Verfahren wird dann teilweise von dem Navigationssystem durch die Ermittlung und Bereitstellung des zukünftigen Straßenverlaufs ausgeführt und teilweise, insbesondere bezüglich der Ermittlung der Querführungsparameter, durch das Steuergerät des Fahrerassistenzsystems, wobei selbstverständlich auch andere Ausgestaltungen denkbar sind.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: einen Verlauf einer Straßenüberhöhung,
- Fig. 3: eine Skizze zum Ablauf des erfindungsgemäßen Verfahrens, und
- Fig. 4: eine weitere Skizze zur Erläuterung des erfindungsgemäßen Verfahrens.

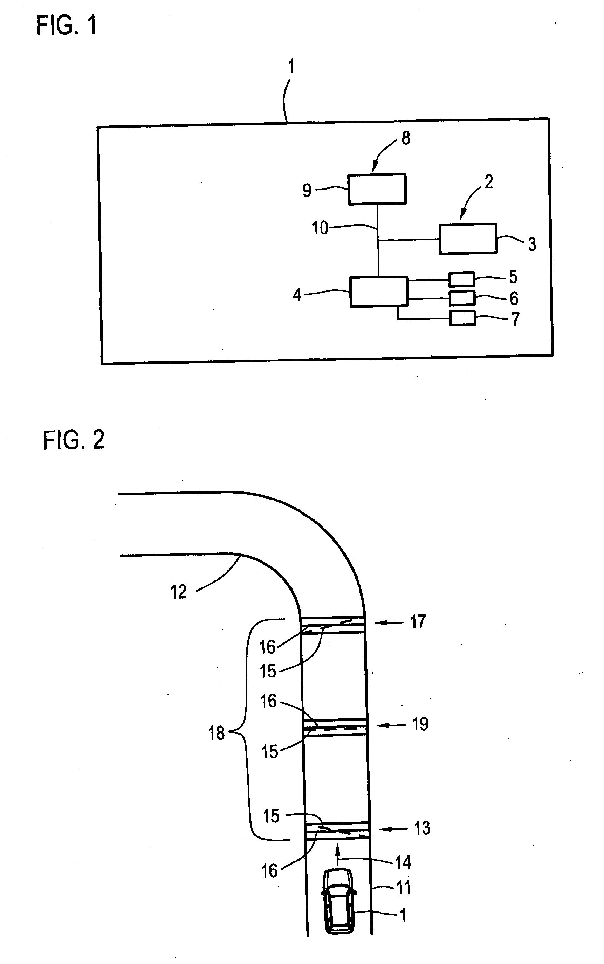

Fig. 1 zeigt ein erfindungsgemäßes Kraftfahrzeug 1. Es umfasst ein zur teilautomatischen und/oder automatischen Querführung des Kraftfahrzeugs 1 ausgebildetes Fahrerassistenzsystem 2, also ein querführendes Fahrerassistenzsystem, dem ein Steuergerät 3 zugeordnet ist.

Ferner umfasst das Kraftfahrzeug 1 ein Navigationssystem 4, welches zur Auswertung der Daten verschiedener Sensoren ausgebildet ist, wobei vorliegend ein GPS-Sensor 5, eine Odometrie-Sensorik 6 und eine Inertial-Sensorik 7 dargestellt sind. Ferner ist in Fig. 1 ein dem Lenksystem 8 des Kraftfahrzeugs 1 zugeordnetes Steuergerät 9 dargestellt.

Verschiedene Komponenten des Kraftfahrzeugs 1, insbesondere die Steuergeräte 3 und 9 sowie das Navigationssystem 4, kommunizieren über einen CAN-Bus 10. Das Fahrerassistenzsystem 2 ist nun ausgebildet, das erfindungsgemäße Verfahren durchzuführen, das bedeutet, es wird mit Hilfe des Navigationssystems 4 ein zukünftiger Straßenverlauf (prädiktive Streckendaten) ermittelt, dem Straßenüberhöhungsinformationen zugeordnet sind. Das Steuergerät 3 nutzt diesen zukünftigen Straßenverlauf und die Straßenüberhöhungsinformation, um hieraus angepasste Querführungsparameter zu ermitteln, die durch eine Änderung der Straßenüberhöhung hervorgehobene laterale Spurabweichungen des Kraftfahrzeugs 1 so ausgleichen, dass ständig innerhalb der Systemgrenzen des Fahrerassistenzsystems 2 gearbeitet wird und die Fahrt für einen Fahrer möglichst komfortabel verläuft. Die Querführungsparameter werden an das Steuergerät 9 übermittelt, so dass der entsprechende Lenkeingriff auch tatsächlich durchgeführt werden kann. Als Querführungsparameter können beispielsweise ein Solllenkwinkel(-Verlauf) und/oder ein Lenkmoment(-enverlauf) durch das Fahrerassistenzsystem 2 vorausberechnet werden.

Fig. 2 zeigt anhand einer Prinzipskizze einen typischen Verlauf der Straßenüberhöhung in einem Änderungsbereich. Gezeigt ist ein zukünftiger Straßenverlauf 11 vor dem erfindungsgemäßen Kraftfahrzeug 1. Ersichtlich folgt in einem bestimmten Abstand eine Linkskurve 12. Betrachtet man an der Stelle 13 den Verlauf der Fahrbahnoberfläche 15 quer zur Fahrtrichtung 14 des Kraftfahrzeugs 1, so stellt man fest, dass eine Straßenüberhöhung vorliegt, da der Querverlauf 15 gegenüber der Horizontalen 16 geneigt ist. Hier liegt eine Rechtsneigung vor, welche häufig verwendet wird. In Kurven soll die Straßenüberhöhung jedoch derart sein, dass eine Neigung zur Innenseite der Kurve vorliegt. Entsprechend erkennt man an der Position 17, dass der Querverlauf 15 unmittelbar vor der Linkskurve 12 entgegengesetzt dem Querverlauf 15 an der Position 13 geneigt ist. Die Straßenüberhöhung wird dazu in einem Bereich 18, der beispielsweise 50 m lang sein kann, kontinuierlich geändert, so dass beispielsweise an der Position 19 der Querverlauf 15 gänzlich in der Horizontalen 16 liegt.

Fährt nun das Kraftfahrzeug 1, ohne dass diese Änderung der Straßenüberhöhung berücksichtigt wird, durch den Bereich 18, tritt eine laterale Spurabweichung auf, die nach der Vorausberechnung nicht hätte geschehen dürfen, nachdem die Information über die Straßenerhöhung ja nicht bekannt ist. Zur Korrektur werden dann große Lenkmomente benötigt, was nicht nur dem Komfort abträglich ist, sondern auch die Systemgrenzen des Fahrerassistenzsystems 2 überschreiten kann.

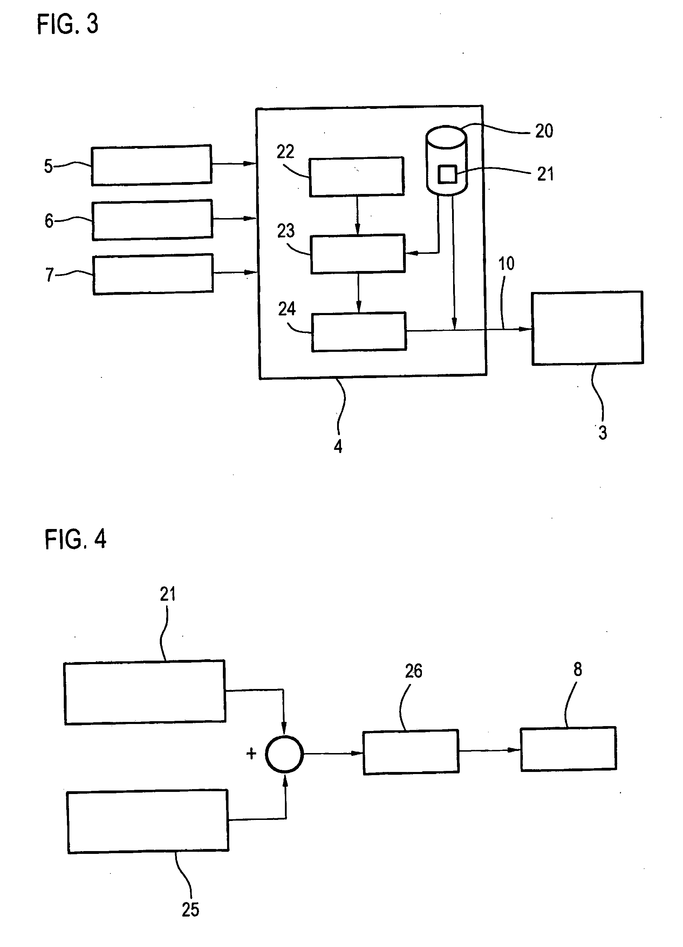

Im Fahrerassistenzsystem 2 des Kraftfahrzeugs 1 wird nun jedoch eine Straßenüberhöhungsinformation beim Betrieb des Fahrerassistenzsystems 2 berücksichtigt, wobei die grundsätzliche Funktionalität durch die Figuren 3 und 4 näher erläutert werden soll.

In einer Kartendatenbank 20 enthält das Navigationssystem 4 neben den üblichen Kartendaten diesen ortsgenau zugeordnet Straßenüberhöhungsinformationen 21. Diese können in Form eines genauen Verlaufs entlang eines Streckenabschnitts vorgegeben sein, jedoch kann auch die integrale Änderung über den Streckenabschnitt niedergelegt werden.

Ersichtlich empfängt das Navigationssystem 4 Sensordaten des GPS-Sensors 5, der Odometrie-Sensorik 6 und der Inertial-Sensorik 7. Diese Sensordaten werden im Rahmen der Positionierung 22 des Kraftfahrzeugs berücksichtigt, wonach mittels der Kartendaten ein Abgleich 23 auf die gespeicherte Karte erfolgt, sogenanntes Map-Matching. So wird letztlich bestimmt, auf welcher der in der Kartendatenbank 20 gespeicherten Straßen, konkret in welchem dort gespeicherten Streckenabschnitt (Klothoide), sich das Kraftfahrzeug 1 befindet. Ist die Position des Kraftfahrzeugs 1 bezüglich der Kartendaten bestimmt, kann ein zukünftiger Straßenverlauf in einem Bereitstellungsschritt 24 zur Verfügung gestellt werden, wobei nun diesem zukünftigen Straßenverlauf zugeordnet auch die entsprechenden Straßenüberhöhungsinformationen 21 mit zur Verfügung gestellt werden. Der zukünftige Straßenverlauf, auch als prädiktive Streckendaten bezeichnet, wird über den CAN-Bus 10 anderen Steuergeräten beziehungsweise Systemen übermittelt, so auch dem Steuergerät 3 des Fahrerassistenzsystems 2.

Dieses nutzt nun, wie in Fig. 4 dargestellt, nicht nur die bislang zur Verfügung gestellten Daten 25 über den zukünftigen Straßenverlauf, sondern auch die Straßenüberhöhungsinformation 21, um die Querführungsparameter 26 zu ermitteln, die dann zur Ansteuerung des Lenksystems 8 für einen entsprechenden Lenkeingriff genutzt werden.

Dabei sollen zwei Ausführungen vorgestellt werden, wie das Fahrerassistenzsystem 2, konkret das Steuergerät 3, die Querführungsparameter 26 unter Berücksichtigung der Straßenüberhöhungsinformation 21 anpasst. So kann zum einen vorgesehen sein, dass sozusagen kontinuierlich, gegebenenfalls in kleinen Schritten, entlang eines Streckenabschnitts betrachtet wird, welche laterale Spurabweichung sich durch Nichtbeachtung der Straßenüberhöhungsinformation ergeben würde. Diese wird dann unmittelbar durch eine entsprechende Anpassung des Querführungsparameters, beispielsweise eines Solllenkwinkels, korrigiert.

In einer anderen Ausgestaltung wird ein Streckenabschnitt über seine gesamte Länge betrachtet, das bedeutet, es wird eine integrale laterale Spurabweichung, die bei Nichtbeachtung der Straßenüberhöhungsinformation auftreten würde, bestimmt, welche dann bevorzugt durch entsprechende Korrekturmaßnahmen innerhalb dieses Streckenabschnitts korrigiert wird. Dann ist es auch möglich, gegebenenfalls örtlich laterale Spurabweichungen aufgrund der Straßenüberhöhung zuzulassen, wenn diese zuvor oder danach wieder korrekt ausgeglichen werden.

Insgesamt erlaubt die Erfindung also durch Berücksichtigung der Straßenüberhöhungsinformation ein komfortables, in den Systemgrenzen des Fahrerassistenzsystems 2 bleibendes Fahren ohne Störungen durch Änderungen der Straßenüberhöhung.

Es sei an dieser Stelle noch angemerkt, dass die Straßenüberhöhungsinformation grundsätzlich auch aus Sensordaten wenigstens eines Sensors, beispielsweise einer Stereokamera und/oder eines Entfernungssensors, insbesondere eines Lasersensors, ermittelt werden kann, bevorzugt ist es jedoch, die Kartendatenbank eines Navigationssystems entsprechend zu erweitern.

## Patentansprüche

1. Verfahren zum Betrieb eines querführenden Fahrerassistenzsystems eines Kraftfahrzeugs, bei dem ein zukünftiger Straßenverlauf aus Umfeld- und/oder Betriebsdaten des Kraftfahrzeugs ermittelt und daraus wenigstens ein einen Lenkeingriff bestimmender Querführungsparameter abgeleitet wird,
**dadurch gekennzeichnet,**
**dass** bei der Ermittlung des Straßenverlaufs und/oder der Querführungsparameter eine die Änderung der Abweichung des Querverlaufs der Fahrbahnoberfläche von der Horizontalen beschreibende Straßenüberhöhungsinformation berücksichtigt wird, wobei eine aus einer Änderung der Straßenüberhöhung resultierende laterale Spurabweichung für den zukünftigen Straßenverlauf unter Berücksichtigung der Straßenüberhöhungsinformation ermittelt und durch eine Anpassung des Querführungsparameters korrigiert wird.

2. Verfahren nach Anspruch 1,
**dadurch gekennzeichnet,**
**dass** die Straßenüberhöhungsinformation aus den Sensordaten wenigstens eines Sensors, insbesondere einer Stereokamera und/oder eines Entfernungssensors, ermittelt wird.

3. Verfahren nach Anspruch 1 oder 2,
**dadurch gekennzeichnet,**
**dass** die Straßenüberhöhungsinformation aus den Daten eines Navigationssystems ermittelt wird.

4. Verfahren nach Anspruch 3,
**dadurch gekennzeichnet,**
**dass** ein Navigationssystem verwendet wird, bei dem jedem Streckenabschnitt eine Änderung und/oder ein Verlauf der Straßenüberhöhung zugeordnet ist.

5. Verfahren nach einem der vorangehenden Ansprüche,
**dadurch gekennzeichnet,**
**dass** auch eine die Abweichung des Querverlaufs der Fahrbahnoberfläche von der Horizontalen beschreibende Straßenüberhöhungsinformation bei der Ermittlung des Straßenverlaufs und/oder der Querführungsparameter berücksichtigt wird.

6. Verfahren nach einem der vorangehenden Ansprüche,
**dadurch gekennzeichnet, dass**
für einen Änderungsbereich eines Streckenabschnitts, in dem sich die Straßenüberhöhung ändert, bei einem bekannten Verlauf der Straßenüberhöhung diese zeitaktuell anhand der Straßenüberhöhungsinformation korrigiert wird.

7. Verfahren nach einem der Ansprüche 1 bis 5,
**dadurch gekennzeichnet,**
**dass** für einen Änderungsbereich eines Streckenabschnitts eine integrale laterale Spurabweichung aus der Straßenüberhöhungsinformation ermittelt und über diesen Änderungsbereich korrigiert wird.

8. Verfahren nach einem der vorangehenden Ansprüche,
**dadurch gekennzeichnet,**
**dass** als Querführungsparameter ein aktueller Solllenkwinkel verwendet wird.

9. Verfahren nach einem der vorangehenden Ansprüche,
**dadurch gekennzeichnet,**
**dass** der zukünftige Streckenverlauf in einem oder dem Navigationssystem ermittelt und dem Fahrerassistenzsystem zur Verfügung gestellt wird, insbesondere über einen Fahrzeugbus.

10. Kraftfahrzeug (1), umfassend ein querführendes Fahrerassistenzsystem (2), ausgebildet zur Durchführung eines Verfahrens nach einem der vorangehenden Ansprüche.

## Claims

1. Method for the operation of a transverse-control driver assistance system of a motor vehicle, wherein a future road course is ascertained from environmental and/or operating data of the motor vehicle and at least one transverse control parameter that determines a steering intervention is derived therefrom, **characterised in that**
road banking information which describes a change in the deviation of the transverse course of the road surface from the horizontal is taken into consideration when determining the road course and/or the transverse control parameters, while a lateral track deviation resulting from a change in the road banking is determined for the future road course, taking account of the road banking information, and is corrected by adjustment of the transverse control parameter.

2. Method according to claim 1,
**characterised in that**
the road banking information is ascertained from the sensor data of at least one sensor, particularly a stereo camera and/or a distance sensor.

3. Method according to claim 1 or 2,
**characterised in that**
the road banking information is determined from the data of a navigation system.

4. Method according to claim 3,
**characterised in that**
a navigation system is used wherein a change in and/or course of the road banking is assigned to each road section.

5. Method according to one of the preceding claims,
**characterised in that** road banking information describing the deviation of the transverse course of the road surface from the horizontal is also taken into consideration when determining the road course and/or the transverse control parameters.

6. Method according to one of the preceding claims,
**characterised in that**
for a region of change of a road section in which the road banking changes, where the course of the road banking is known, said road banking is corrected in real time using the road banking information.

7. Method according to one of claims 1 to 5,
**characterised in that**
for a region of change of a road section, an integral lateral track deviation is determined from the road banking information and corrected over this region of change.

8. Method according to one of the preceding claims,
**characterised in that**
a current nominal steering angle is used as transverse control parameter.

9. Method according to one of the preceding claims,
**characterised in that**
the future road course is determined in a or the navigation system and made available to the driver assistance system, particularly via a vehicle bus.

10. Motor vehicle (1), comprising a transverse control driver assistance system (2), configured to carry out a method according to one of the preceding claims.

## Revendications

1. Procédé servant à faire fonctionner un système d'assistance au conducteur de guidage transversal d'un véhicule automobile, où un tracé de route à venir est déterminé à partir des données d'environnement et/ou de fonctionnement du véhicule automobile et, à partir de cela, au moins un paramètre de guidage transversal déterminant une intervention sur le braquage est déduit,
**caractérisé en ce**
**que**, lors de la détermination du tracé de route et/ou des paramètres de guidage transversal, une information de dévers de route décrivant la variation de la déviation du tracé transversal de la surface de chaussée par rapport à l'horizontale est prise en compte, où une déviation de voie latérale résultant d'une variation du dévers de route est déterminée pour le tracé de route à venir en prenant en compte l'information de dévers de route et est corrigée en adaptant le paramètre de guidage transversal.

2. Procédé selon la revendication 1,
**caractérisé en ce**
**que** l'information de dévers de route est déterminée à partir des données détectées d'au moins un capteur, en particulier d'une caméra stéréo et/ou d'un capteur de distance.

3. Procédé selon la revendication 1 ou 2,
**caractérisé en ce**
**que** l'information de dévers de route est déterminée à partir des données d'un système de navigation.

4. Procédé selon la revendication 3,
**caractérisé en ce**
**qu'**un système de navigation est utilisé, où une variation et/ou un tracé du dévers de route sont associés à chaque tronçon de parcours.

5. Procédé selon l'une quelconque des revendications précédentes,
**caractérisé en ce**
**qu'**également une information de dévers de route décrivant la déviation du tracé transversal de la surface de chaussée par rapport à l'horizontale est prise en compte lors de la détermination du tracé de route et/ou des paramètres de guidage transversal.

6. Procédé selon l'une quelconque des revendications précédentes,
**caractérisé en ce**
**que** le dévers de route est corrigé en temps réel à l'aide de l'information de dévers de route pour une zone de variation d'un tronçon de parcours, sur lequel le dévers de route varie, pour un tracé connu dudit dévers de route.

7. Procédé selon l'une quelconque des revendications 1 à 5,
**caractérisé en ce**
**qu'**une déviation de voie latérale intégrale est déterminée pour une zone de variation d'un tronçon de parcours à partir de l'information de dévers de route et est corrigée sur ladite zone de variation.

8. Procédé selon l'une quelconque des revendications précédentes,
**caractérisé en ce**
**qu'**un angle théorique de braquage instantané est utilisé en tant que paramètre de guidage transversal.

9. Procédé selon l'une quelconque des revendications précédentes,
**caractérisé en ce**
**que** le tracé de parcours à venir est déterminé dans un ou dans le système de navigation et est fourni au système d'assistance au conducteur, en particulier par l'intermédiaire d'un bus de véhicule.

10. Véhicule automobile (1), comprenant un système d'assistance au conducteur (2) de guidage transversal, réalisé aux fins de la mise en oeuvre d'un procédé selon l'une quelconque des revendications précédentes.
